# EUROPEAN PATENT SPECIFICATION

(11) **EP 1 391 079 B1**
(45) Date of publication and mention of the grant of the patent: **10.09.2008**
(21) Application number: 02708380.7
(22) Date of filing: 19.03.2002
(51) Int. Cl.: H04L 12/24, H04L 12/56

(54) **METHOD AND SYSTEM FOR IMPLEMENTING A FAST RECOVERY PROCESS IN A LOCAL AREA NETWORK**
VERFAHREN UND SYSTEM ZUR IMPLEMENTIERUNG EINES SCHNELLEN BEHEBUNGSPROZESSES IN EINEM LOKALEN NETZWERK
PROCEDE ET SYSTEME PERMETTANT DE METTRE EN OEUVRE UN PROCESSUS DE REPRISE RAPIDE DANS UN RESEAU LOCAL D'ENTREPRISE

(30) Priority: 28.05.2001 FI 20011114
(43) Date of publication of application: 25.02.2004
(73) Proprietor: Nokia Siemens Networks Oy, 02610 Espoo (FI)
(72) Inventor: SAKSIO, Mauri, FIN-02320 Espoo (FI)
(74) Representative: Simmelvuo, Markku Kalevi
(86) International application number: PCT/FI2002/000224
(87) International publication number: WO 2002/098059

(56) References cited:
- EP-A2- 0 957 648
- WO-A1-00/28685
- WO-A2-00/51290
- WO-A2-96/05704
- US-A- 5 732 192
- US-B1- 6 222 854

## Description

The present invention relates to local area networks (LAN). In particular, the present invention relates to a novel and improved method and system for implementing a fast recovery process in a local area network.

### BACKGROUND OF THE INVENTION

The local area network (LAN) is a group of computers and associated devices that share a common communications line and typically share the resources of a single processor or server within a small geographic area (for example, within an office building, within certain parts of IP backbone networks or within a network element, such as a telephone exchange or network control element). In this context, the local area network can also mean an architecture that uses a so-called "loosely coupled multiprocessor" architecture and in which the messages between the processors are sent via Ethernet. This kind of architecture can be implemented, for example, in the IP trunks, MSC Servers (Mobile Switching Center, MSC) or network elements such as Connection Prosessing Server (CPS) or Home Subscriber Server, which are used in 'all IP' architectures of the third generation mobile networks.

Usually, the server has applications and data storage that are shared in common by multiple computer users or central processor units (CPU's). The local area network may serve as few as two or three users or clients (for example, in a home network) or as many as thousands of users. The information is transmitted between two clients or hosts using the paths from the first client to the second client. These paths are formed using the links between the two network elements. Typically the paths are formed beforehand. In redundant networks the first link of the host or client to the first network node is duplicated, thus allowing a recovery to-the other path in a fault situation of the first path.

A router is a device or, in some cases, software in a computer that determines the next network point to which a packet should be forwarded toward its destination. The router is connected to at least two networks and it decides which way to send each information packet based on its current understanding of the state of the networks it is connected to. The router is often included as a part of a network switch.

The switch is a network device that selects a path or circuit for sending a unit of data to its next destination. The switch may also include the function of the router, a device or program that can determine the route and specifically what adjacent network point the data should be sent to. In general, a switch is a simpler and faster mechanism than a router, which requires knowledge about the network and how to determine the route.

Relative to the layered Open Systems Interconnection (OSI) communication model, a switch is usually associated with Layer 2, the Data Link Layer. However, some newer switches also perform the routing functions of layer 3, the Network Layer. Layer 3 switches are also sometimes called IP switches.

On computer and telecommunication devices, a port is generally a specific place for being physically connected to some other device, usually with a socket and plug of some kind. A link is a physical and, in some usage, a logical connection between two points. Both ends of the link are usually connected to the port.

In this context, the term "host" means any computer that has a complete two-way access to other computers in the network. A host has a specific "local or host number" that, together with the network number, forms its unique address. A "host" is a node in a network.

To maintain the operation of the network one has to take care of the fact that all the substantial elements are operational. The management of faults as a part of the network management improves the reliability of the network, thereby providing the maintainer of the network and the network itself with the tools for promptly detecting the faults and correcting them. The responsibility of the management of faults is to arrange things so that problems and interruptions would be visible to the users as little as possible.

The devices in the network may send a notification of a critical situation every time there is a fault situation occurring (*logging*). Examples of critical situations are, e.g. the rebooting of a device or a response that was never received from a device. In most of the cases, the management of faults based on merely this kind of information does not give a sufficient picture of the state of the network. For example, when some device is damaged, it is not always able to send a notification thereof.

The devices of the network may be regularly asked about their status (polling). Enquiries such as this enable one to detect the faults quite promptly. However, they take the capacity of the network from the actual payload. One has to balance between the detection accuracy and network capacity to be used, i.e. the greater the detection accuracy one wishes to have, the bigger part of the transfer capacity of the network is used. Other matters that have an influence on the selection of the polling interval are the number of the devices to be monitored and the capacity of the links to be used.

When the failure is detected, one has to accurately locate the fault and isolate the rest of the network from the disturbance caused by the fault. The network has to be configured or changed in such a way that the effects of the elimination of a component on the operation of the network are minimised. Finally, the network is reset by correcting or changing the faulty components.

However, there are situations and network solutions in which the above-mentioned methods for the management of faults and most of all for the fault detection are not applicable because the fault has to be detected without delay. For example, in the internal network structure of a network element or IP network, the failure of a link combining two plug-in units may cause problems in an ongoing call or real time data connection, in which case the fault has to be detected very fast, in order that the call or connection would not be interrupted and that the users would not detect the fault.

The standard method in a redundant local area network is to use the Spanning Tree Protocol (STP) or some vendor-specific, proprietary solution. The spanning tree protocol and algorithm were developed by a committee of the IEEE (Institute of Electrical and Electronics Engineers). Currently, the IEEE is attempting to institute enhancements to the spanning tree algorithm that will reduce network recovery time. The goal is to go from 30 to 60 seconds after a failure or change in link status to less than 10 seconds. However, due to the long recovery time needed, the STP is not suitable for environments requiring fast (a maximum of few seconds) recovery.

An alternative solution is that each IP host monitors that it has a functioning link to some critical part of the LAN (typically this is the router connecting the host to the external IP network). A simple method to implement the monitoring is to use the ICMP ECHO (ping) messages, which are sent to the router and to which it is supposed to respond. ICMP is a message control and error-reporting protocol between a host server and a gateway to the Internet. ICMP uses Internet Protocol datagram, but the messages are processed by the IP software and are not directly apparent to the application user.

The major problem of the standard STP is its possibly slow recovery (recovery may take several tens of seconds during which time part or all of the LAN won't carry traffic). Vendor-specific solutions are much faster, but they require that all critical equipment (mainly LAN switches) be purchased from a single provider.

There are also some problems with the ICMP ECHO method: It can be used only with links which have a corresponding IP address. That is, this method cannot be used if we have a redundant LAN port which does not have an IP address bound to it (for example, the port is just idling and can be used in case of a primary LAN port failure). The ICMP ECHO messages create some extra load for the LAN and especially for the router (or some other device which the host wants to ping). Thus, it is not possible to monitor the functionality of the link constantly but only intermittently, for example, once in five seconds. Some ECHO messages can also be lost due to congestion and thus the recovery can be started only after a few unanswered messages. As a result, even though the recovery itself can be very fast, the detection of a fault is still rather slow, taking from several seconds to approximately 20 seconds.

WO 0028685 discloses a solution in which management of forwarding databases in the case of link failures on bridges according to the all improved spanning tree, limits the propagation of notifications of topology change only those parts of the network which are affected by the link failures, and trigger partial flushing as opposed to complete forwarding database flushing of learned MAC addresses to relearn the sets of addresses associated with ports affected by the change in topology.

WO 9605704 discloses a solution in which data elements stored in a distributed data structure are accessible by means of a hierarchical routing network in which routes through the network to individual data elements are flagged.

### SUMMARY OF THE INVENTION

The present invention concerns a solution for accelerating fault recovery in a redundant, tree structured local area network.

According to one aspect of the invention, there is provided a method for fast recovery of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage. The method comprises: monitoring in an intermediate tree structure element the state of a critical up-link, the critical up-link being an only link from the intermediate tree element to an upper stage tree element in the tree structure, detecting, in the intermediate tree structure element, a link-down state in the critical up-link, and setting a dependent down-link in a link-down state, the dependent down-link leading to a lower stage tree element in the tree structure and being an only link from the intermediate tree element to the lower stage tree element in the tree structure.

According to another aspect of the invention, there is provided a method for fast recovery of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage. The method comprises: monitoring, in a host device, the state of an active up-link leading to an intermediate tree element in a first tree, detecting, in the host device, a link-down state in the active up-link, notifying host software about the link-down state, and starting a recovery process in the host device by changing the failured active up-link to a redundant up-link leading to an upper stage intermediate tree element in a second tree.

According to another aspect of the invention, there is provided an apparatus for fast recovering of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage. The apparatus is configured to: monitor the state of a critical up-link, the critical up-link being an only link to an upper stage tree element in the tree structure, detect a link-down state in the critical up-link, and set a dependent down-link in a link-down state, the dependent down-link leading to a lower stage tree element in the tree structure and being being an only link to the lower stage tree element in the tree structure.

According to another aspect of the invention, there is provided a host device in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage. The host device is configured to: monitor the state of an active up-link leading to an intermediate tree element in a first tree, detect a link-down state in the active up-link, notify host software about the link-down state, and start a recovery process by changing the failured active up-link to a redundant up-link leading to an upper stage intermediate tree element in a second tree.

In this context, the tree structure means that there are no closed loops in the network. The tree is a directed non-cyclic network. The invention is used to define some of the LAN ports, which are, for example, used to connect the switch into the IP router, as critical ones. Likewise, some other LAN ports, used to connect the IP hosts to said switch, are defined as dependent of the critical links. If a critical LAN port or corresponding link is found to be non-functional, e.g. no carrier sensed, all LAN ports or corresponding links depending on it are declared as non-functional. The declaration is done at link level in a way which allows the device(s) or ports connected to the other end of the link to notice that the link is not in use anymore to carry traffic. Thus, the net effect is that the knowledge of the fault at the upper level of the tree is propagated very fast down to the hosts, thus enabling fast recovery.

The present invention may enable a considerably fast detection time of a failure taking about a second, perhaps even less. Because of this, the recovery time can be reduced significantly. Also the fault detection, according to the present invention, does not load the LAN, even though the load reduction is not likely to be significant. Also, the usability of the present invention does not require that there is an IP address bound to all ports (links) to be monitored.

The present invention also overcomes the problems of the ICMP ECHO mechanism in the sense that the ICMP ECHO mechanism is an end-to-end verification of the path, whereas the present invention can guarantee that the physical path from the host to the external IP network or vice versa is in use.

Also the present invention can be implemented in a way which is compatible with the current LAN switches. The reason for this is the fact that the inventive mechanism does not require any protocol between the LAN switches.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1** is a block diagram illustrating a network structure according to one embodiment of the present invention, and
**Figs 2a-2b** describe a structure of the network element according to one embodiment of the present invention in more detail.

### DETAILED DESCRIPTION OF THE INVENTION

Reference will now be made in detail to the embodiments of the present invention, examples of which are illustrated in the accompanying drawings.

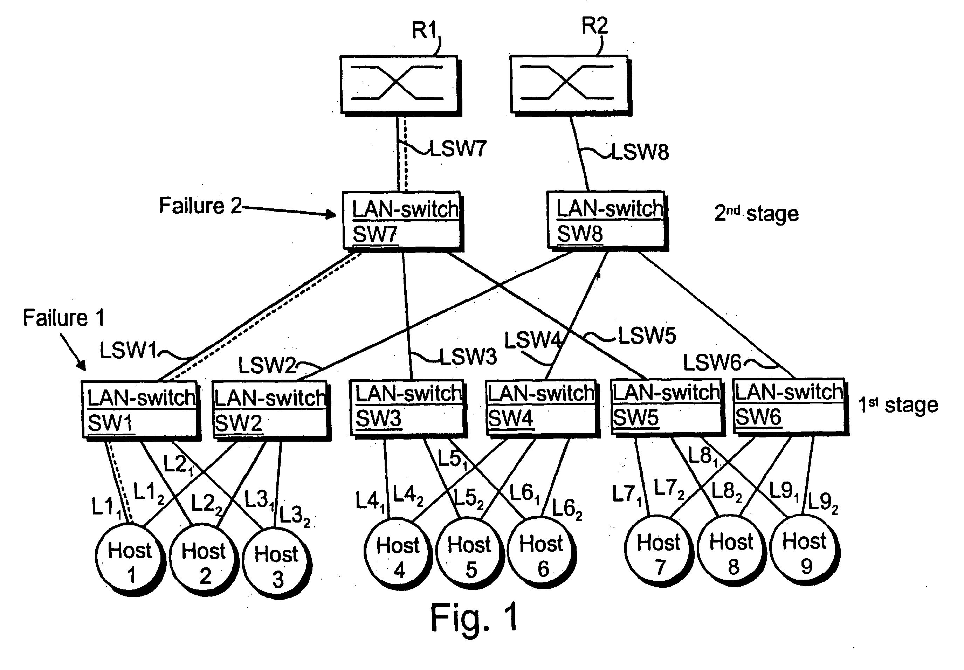

In Figure 1 there is described a redundant LAN, which has the topology of a tree. The term "redundant" means that the host connection has been duplicated in order to allow a switch over from the active link L1₁ to the standby link L1₂ in a link or a path failure situation. Also in figure 1 there is one active connection (traffic flow) described with the dash line. This connection is established between the Host 1 and the router R1. It should be noted that the LAN topology in this example is such that there are at least two stages of LAN switches.

If one of the 1^{st} stage LAN switches SW1, ..., SW6 has failed, failure 1, or has been powered down for maintenance etc. there is not a big problem because the hosts Host 1, ..., Host 9 are connected directly to the 1^{st} LAN switches and they can detect themselves when a link/LAN port goes from link-up state to link-down state. The recovery can be initiated immediately when the LAN driver software in the host notifies of the link-down situation. If one of the 2^{nd} stage LAN switches SW7, SW8 has failed, failure 2, the situation is the same if the link to the corresponding router or a link between a 1^{st} stage and 2^{nd} stage LAN switch has failed, the problem is that because the hosts are not directly connected to the 2^{nd} stage LAN switch, they do not directly detect the failure. This is because the link from the host to the 1^{st} stage LAN switch stays in the link-up state. The recovery only starts when the hosts find out that the router is not responding to the ICMP ECHO messages. But as mentioned above, this is not the best and fastest way to start the recovery process.

In the following there is described the idea of the present invention. In the failed 2^{nd} stage LAN switch SW7 it has been defined that the link LSW7 to router R1, called up-link, is a critical link and the so-called down-links LSW1, LSW3, LSW5 to the 1^{st} stage LAN switches SW1, SW3, SW5, are dependent of the critical up-link LSW7. Thus, if the up-link LSW7 fails, all down-links LSW1, LSW3, LSW5 are set in the link-down state. Likewise, in the 1^{st} stage LAN switches SW1, SW3, SW5, the links LSW1, LSW3, LSW5 to the 2^{nd} stage LAN switch SW7 are defined to be as critical and links L1₁, L2₁, L3₁ L4₁, L5₁, L6₁, L7₁, L8₁, L9₁ to the hosts 1, ,2, ..., 9, down-links, are defined to be dependent of the up-links LSW1, LSW3, LSW5. The net result is that if the 2^{nd} stage LAN switch or its link to the router fails, failure 2, then the link-down state is propagated down to hosts Host 1, ..., Host 9. The same will happen if the link between a 1^{st} stage and 2nd stage LAN switch fails. Thus, the hosts become very quickly aware of a failure in the LAN and can start recovery immediately.

One example of said recovery is that the host transfers to a predetermined default mode. This is the case if also the redundant up-link, e.g. link L1₂ for Host 1, is in a link down state. For instance the Home Subscriber Server, an example of possible Host 1, is solving a profile of a certain user and it needs to be connected to the other network element (not shown) behind the routers R1, R2. If both links L1₁ and L1₂ are in link down state, the recovery in this example is that Host 1 uses a predetermined default profile for said user. The only important matter is that the host is notified as soon as possible of the link down situation of said active and redundant links.

It must be noted that the necessary changes will be implemented in the LAN switches, even though co-operation with the host software is needed. The host moves all LAN traffic into the redundant LAN port if the currently used LAN port is changed into a link-down state. It must also be noted that there can be more than one critical link per LAN switch and that a link can depend on zero, one or more critical links. If a link depends on more than one critical links, the link will be put into a link-down state if any of the critical links is in a link-down state.

In the case of a failed link, the LAN switch or router is repaired and put into operation, and all ports connected to it are put into a link-up state unless otherwise specified by some management operation. As a result, all links dependent of it are also put into a link-up state unless overridden by management operations. This process is very much the same as in a failure situation where the hosts are notified of the failure situation.

The above described inventive mechanism can also be used to notify the hosts or the LAN switches, if there is something wrong with the transmit-direction of the connection. The idea is that normally a device cannot know whether or not it is transmitting properly or whether or not the receiving device is receiving properly. However, it is possible to think of a link to be dependent of itself and change the state of the link into a link-down state if it is noticed that the device on the other end of the link is not receiving or sending properly, i.e. there are excessive CRC (cyclic redundancy check) errors, runt frames etc.

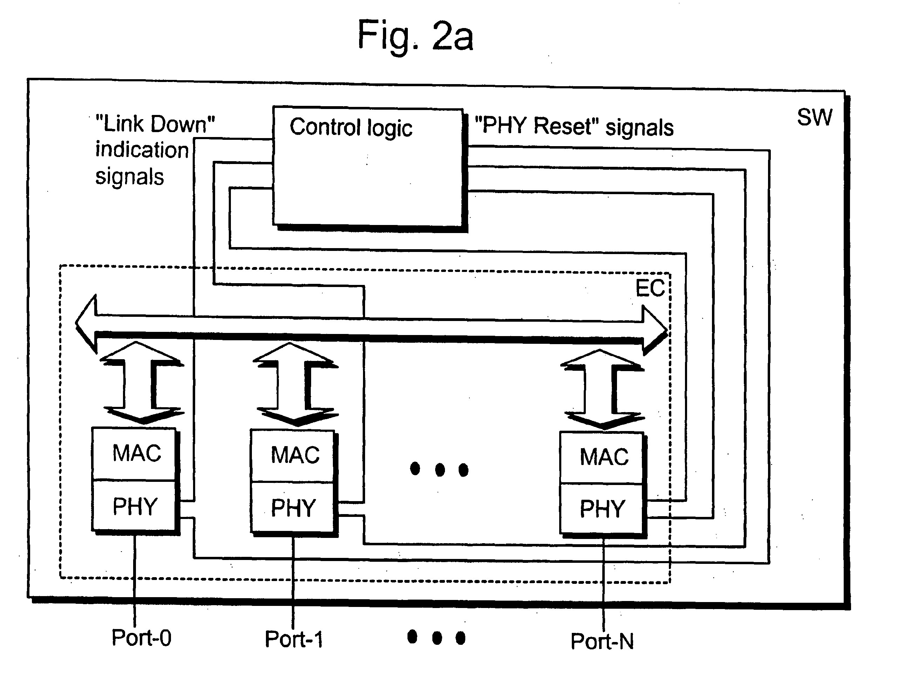

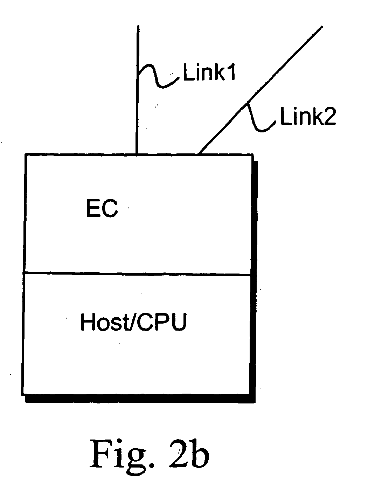

In figure 2a there is described a coarse example of the LAN Switch structure according to one embodiment of the present invention. In figure 2b there is described a coarse example of the host or CPU unit structure according to one embodiment of the present invention.

In both examples there is an Ethernet controller or Ethernet physical layer transceiver EC connected to the network element itself. The Ethernet controller EC is further divided at least in two components or modules which, of course, can be in the same circuit. These modules are the Media Access Controller MAC and the physical layer device PHY. The media access layer communicates directly with the network adapter card and is responsible for delivering error-free data between two computers. The physical layer device PHY performs the same general function as a transceiver in the typical Ethernet system.

For a typical network connection the data terminal equipment, LAN switch, host or CPU device (computer) contain an Ethernet interface EC which generates and sends Ethernet frames that carry data between computers attached to the network. The interface or repeater port might also be designed to include the PHY electronics internally. In the present invention the Ethernet controller EC is designed to monitor the status of the active link. After the Ethernet controller has noticed a link-down situation, it "sends" information about the situation downwards by setting the downward links into a link-down state. When the Ethernet controller in the host notices the link-down situation of the active link it notifies the host software, and the recovery can be started.

In figure 2a there is described the implementation of N ports into one LAN-Switch. The Ethernet Controller EC comprises n pairs of the media access controller MAC - physical layer device PHY. Physical layer devices are connected to the control logic, which typically can be implemented by a microprocessor in order to monitor and control the state of the PHY devices.

The essential feature of the PHY devices is that they contain or provide an information signal and/or register that informs of the state of the link or port. It is also useful if the information can be monitored using software. Also the PHY device can provide said information by producing an interruption to the microprocessor that can interpret this interruption as a change of the state of the PHY device. Another essential feature of the PHY device is that it can be reset into the state in which it does not give idle information to the other PHY device. In figure 2a, the control of the above- mentioned two essential features is described using two different signal types. "Link Down" indication signals are sent from the PHY devices in order to inform the Control logic of the present situation of the link. Thus the PHY devices can be set into the state which can be recognised as a failure situation in the down link of said devices. "PHY Reset" signals are used to set the PHY devices into the down state so that the other PHY device in a down link direction can recognise the failure in the up link direction, i.e. these signals disable the PHY devices.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for fast recovery of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage, **characterised in that** the method comprises:
monitoring in an intermediate tree element the state of a critical up-link, the critical up-link being an only link from the intermediate tree element to an upper stage tree element in the tree structure,
detecting, in the intermediate tree element, a link-down state in the critical up-link, and
setting in the intermediate tree element, a dependent down-link in a link-down state, the dependent down-link leading to a lower stage tree element in the tree structure and being an only link from the intermediate tree element to the lower stage tree element in the tree structure.

2. The method according to claim 1, further comprising specifying the up-link of a network element being a critical up-link, if the failure of said link affects the data flow of a down-link of said network element.

3. The method according to claim 1, further comprising specifying the link of a network element being a dependent down-link, if there is a critical up-link between said down-link and the next network element.

4. The method according to claim 1, wherein the monitoring of the state of a critical up-link is accomplished by monitoring the quality of the data flow on the link.

5. A method for fast recovery of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage, **characterised in that** the method comprises:
monitoring, in a host device, the state of an active up-link leading to.an intermediate tree element in a first tree,
detecting, in the host device, a link-down state in the active up-link,
notifying host software about the link-down state, and
starting a recovery process in the host device by changing the failured active up-link to a redundant up-link leading to an upper stage intermediate tree element in a second tree.

6. The method according to claim 5, wherein the recovery process comprises:
checking the status of a redundant up-link, and if said up-link is in the link down state; and
transferring said host to a predetermined default mode operation.

7. The method according to claims 5 or 6, **characterised in that** said redundant up-link is a doubling up-link for said active up-link.

8. The method according to any of claims 5 - 7, **characterised in that** monitoring the state of a critical up-link is accomplished by monitoring the quality of the data flow on the link.

9. An apparatus for fast recovering of a host connection in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage, **characterised in that** the apparatus is configured to:
monitor the state of a critical up-link, the critical up-link being an only link to an upper stage tree element in the tree structure,
detect a link-down state in the critical up-link, and
set a dependent down-link in a link-down state, the dependent down-link leading to a lower stage tree element in the tree structure and being an only link to the lower stage tree element in the tree structure.

10. The apparatus according to claim 9, wherein the apparatus further comprises:
a physical layer device (PHY) for monitoring the physical state of said up-link, and
a media access controller (MAC) for changing the state of the down-link.

11. The apparatus according to claim 9 or 10, wherein the up-link is a critical up-link, if the failure of said link affects the data flow of a down-link of said network element.

12. The system according to any of claims 9 - 11, **characterised in that** said monitoring is performed with an Ethernet controller.

13. A host device in a redundant tree structured local area network comprising at least two separate subtrees ending to a set of same host devices, wherein each subtree comprises at least one intermediate stage and wherein an intermediate stage tree element of one tree is not directly connected to an intermediate stage tree element of another tree at the same stage, **characterised in that** the host device is configured to:
monitor the state of an active up-link leading to an intermediate tree element in a first tree,
detect a link-down state in the active up-link,
notify host software about the link-down state, and
start a recovery process by changing the failured active up-link to a redundant up-link leading to an upper stage intermediate tree element in a second tree.

14. The host device according to claim 13, wherein the host device is further configured to:
check the status of a redundant up-link, and if said up-link is in the link down state; and
transfer said host to a predetermined default mode operation.

## Patentansprüche

1. Verfahren zur schnellen Wiederherstellung einer Hostverbindung in einem redundanten baumstrukturierten lokalen Netz, welches wenigstens zwei getrennte Unterbäume umfasst, die in einem Satz gleicher Hostvorrichtungen enden, wobei jeder Unterbaum wenigstens einen Zwischenabschnitt umfasst und wobei ein Zwischenabschnitt-Baumelement eines Baums nicht direkt mit einem Zwischenabschnitt-Baumelement eines anderen Baums am selben Abschnitt verbunden ist, **dadurch gekennzeichnet, dass** das Verfahren umfasst:
Überwachen in einem Zwischenbaumelement den Zustand einer kritischen Aufwärtsverbindung, wobei die kritische Aufwärtsverbindung eine einzige Verbindung vom Zwischenbaumelement zu einem Oberabschnitt-Baumelement in der Baumstruktur ist,
Detektieren im Zwischenbaumelement eines Zustands einer zusammengebrochenen Verbindung in der kritischen Aufwärtsverbindung, und
Setzen im Zwischenbaumelement einer abhängigen Abwärtsverbindung in einen Zustand einer zusammengebrochenen Verbindung, wobei die abhängige Abwärtsverbindung zu einem Unterabschnitt-Baumelement in der Baumstruktur führt und eine einzige Verbindung vom Zwischenbaumelement zum Unterabschnitt-Baumelement in der Baumstruktur ist.

2. Verfahren gemäß Anspruch 1, welches ferner ein Spezifizieren der Aufwärtsverbindung eines Netzelements umfasst, die eine kritische Aufwärtsverbindung ist, falls die Störung der Verbindung den Datenfluss einer Abwärtsverbindung des Netzelements beeinträchtigt.

3. Verfahren gemäß Anspruch 1, welches ferner ein Spezifizieren der Verbindung eines Netzelements umfasst, die eine abhängige Abwärtsverbindung ist, falls es eine kritische Aufwärtsverbindung zwischen der Abwärtsverbindung und dem nächsten Netzelement gibt.

4. Verfahren gemäß Anspruch 1, wobei das Überwachen des Zustands einer kritischen Aufwärtsverbindung durch Überwachen der Qualität des Datenflusses auf der Verbindung erreicht wird.

5. Verfahren zur schnellen Wiederherstellung einer Hostverbindung in einem redundanten baumstrukturierten lokalen Netz, welches wenigstens zwei getrennte Unterbäume umfasst, die in einem Satz gleicher Hostvorrichtungen enden, wobei jeder Unterbaum wenigstens einen Zwischenabschnitt umfasst und wobei ein Zwischenabschnitt-Baumelement eines Baums nicht direkt mit einem Zwischenabschnitt-Baumelement eines anderen Baums am selben Abschnitt verbunden ist, **dadurch gekennzeichnet, dass** das Verfahren umfasst:
Überwachen in einer Hostvorrichtung den Zustand einer aktiven Aufwärtsverbindung, die zu einem Zwischenbaumelement in einem ersten Baum führt,
Detektieren in der Hostvorrichtung eines Zustands einer zusammengebrochenen Verbindung in der aktiven Aufwärtsverbindung,
Benachrichtigen von Hostsoftware über den Zustand der zusammengebrochenen Verbindung, und
Beginnen eines Wiederherstellungsprozesses in der Hostvorrichtung durch Ändern der gestörten aktiven Aufwärtsverbindung in eine redundante Aufwärtsverbindung, die zu einem Oberabschnitt-Zwischenbaumelement in einem zweiten Baum führt.

6. Verfahren gemäß Anspruch 5, wobei der Wiederherstellungsprozess umfasst:
Überprüfen des Status einer redundanten Aufwärtsverbindung, und ob die Aufwärtsverbindung im Zustand einer zusammengebrochenen Verbindung ist; und
Überführen des Hosts in einen vorbestimmten Standardmodusbetrieb.

7. Verfahren gemäß Anspruch 5 oder 6, **dadurch gekennzeichnet, dass** die redundante Aufwärtsverbindung eine Verdopplungsaufwärtsverbindung für die aktive Aufwärtsverbindung ist.

8. Verfahren gemäß einem der Ansprüche 5 bis 7, **dadurch gekennzeichnet, dass** ein Überwachen des Zustands einer kritischen Aufwärtsverbindung durch Überwachen der Qualität des Datenflusses auf der Verbindung erreicht wird.

9. Vorrichtung zum schnellen Wiederherstellen einer Hostverbindung in einem redundanten baumstrukturierten lokalen Netz, welches wenigstens zwei getrennte Unterbäume umfasst, die in einem Satz gleicher Hostvorrichtungen enden, wobei jeder Unterbaum wenigstens einen Zwischenabschnitt umfasst und wobei ein Zwischenabschnitt-Baumelement eines Baums nicht direkt mit einem Zwischenabschnitt-Baumelement eines anderen Baums am selben Abschnitt verbunden ist, **dadurch gekennzeichnet, dass** die Vorrichtung konfiguriert ist, um:
den Zustand einer kritischen Aufwärtsverbindung zu überwachen, wobei die kritische Aufwärtsverbindung eine einzige Verbindung zu einem Oberabschnitt-Baumelement in der Baumstruktur ist,
einen Zustand einer zusammengebrochenen Verbindung in der kritischen Aufwärtsverbindung zu detektieren, und
eine abhängige Abwärtsverbindung in einen Zustand einer zusammengebrochenen Verbindung zu setzen, wobei die abhängige Abwärtsverbindung zu einem Unterabschnitt-Baumelement in der Baumstruktur führt und eine einzige Verbindung zum Unterabschnitt-Baumelement in der Baumstruktur ist.

10. Vorrichtung gemäß Anspruch 9, wobei die Vorrichtung ferner umfasst:
eine Vorrichtung der physikalischen Schicht (PHY) zum Überwachen des physikalischen Zustands der Aufwärtsverbindung, und
einen Medienzugangscontroller (MAC) zum Ändern des Zustands der Abwärtsverbindung.

11. Vorrichtung gemäß Anspruch 9 oder 10, wobei die Aufwärtsverbindung eine kritische Aufwärtsverbindung ist, falls die Störung der Verbindung den Datenfluss einer Abwärtsverbindung des Netzelements beeinträchtigt.

12. System gemäß einem der Ansprüche 9 - 11, **dadurch gekennzeichnet, dass** das Überwachen mit einem Ethernetcontroller durchgeführt wird.

13. Hostvorrichtung in einem redundanten baumstrukturierten lokalen Netz, welches wenigstens zwei getrennte Unterbäume umfasst, die in einem Satz gleicher Hostvorrichtungen enden, wobei jeder Unterbaum wenigstens einen Zwischenabschnitt umfasst und wobei ein Zwischenabschnitt-Baumelement eines Baums nicht direkt mit einem Zwischenabschnitt-Baumelement eines anderen Baums am selben Abschnitt verbunden ist, **dadurch gekennzeichnet, dass** die Hostvorrichtung konfiguriert ist, um:
den Zustand einer aktiven Aufwärtsverbindung zu überwachen, die zu einem Zwischenbaumelement in einem ersten Baum führt,
einen Zustand einer zusammengebrochenen Verbindung in der aktiven Aufwärtsverbindung zu detektieren,
Hostsoftware über den Zustand einer zusammengebrochenen Verbindung zu benachrichtigen, und
einen Wiederherstellungsprozess durch Ändern der gestörten aktiven Aufwärtsverbindung in eine redundante Aufwärtsverbindung zu beginnen, die zu einem Oberabschnitt-Zwischenbaumelement in einem zweiten Baum führt.

14. Hostvorrichtung gemäß Anspruch 13, wobei die Hostvorrichtung ferner konfiguriert ist, um:
den Status einer redundanten Aufwärtsverbindung zu überprüfen, und ob diese Aufwärtsverbindung im Zustand einer zusammengebrochenen Verbindung ist; und
den Host in einen vorbestimmten Standardmodusbetrieb zu überführen.

## Revendications

1. Procédé de reprise rapide d'une connexion d'hôte dans un réseau local structuré en arborescence redondante comprenant au moins deux sous-arborescences distinctes se terminant par un ensemble de dispositifs hôtes identiques, dans lequel chaque sous-arborescence comprend au moins un étage intermédiaire et dans lequel un élément d'arborescence d'étage intermédiaire d'une arborescence n'est pas directement connecté à un élément d'arborescence d'étage intermédiaire d'une autre arborescence au même étage, **caractérisé en ce que** le procédé comprend :
la surveillance dans un élément d'arborescence intermédiaire de l'état d'une liaison montante critique, la liaison montante critique étant une liaison unique de l'élément d'arborescence intermédiaire à un élément d'arborescence d'étage supérieur dans la structure d'arborescence,
la détection, dans l'élément d'arborescence intermédiaire, d'un état de défaillance de liaison dans la liaison montante critique, et
le réglage dans l'élément d'arborescence intermédiaire, d'une liaison descendante dépendante dans un état de défaillance de liaison, la liaison descendante dépendante conduisant à un élément d'arborescence d'étage inférieur dans la structure d'arborescence et étant une liaison unique de l'élément d'arborescence intermédiaire à l'élément d'arborescence d'étage inférieur dans la structure d'arborescence.

2. Procédé selon la revendication 1, comprenant en outre la spécification de la liaison montante d'un élément du réseau comme étant une liaison montante critique, si la défaillance de ladite liaison affecte le flux de données d'une liaison descendante dudit élément de réseau.

3. Procédé selon la revendication 1, comprenant en outre la spécification de la liaison d'un élément de réseau comme étant une liaison descendante dépendante, s'il y a une liaison montante critique entre ladite liaison descendante et l'élément de réseau suivant.

4. Procédé selon la revendication 1, dans lequel la surveillance de l'état d'une liaison montante critique est accomplie en surveillant la qualité du flux de données sur la liaison.

5. Procédé de reprise rapide d'une connexion d'hôte dans un réseau local structuré en arborescence redondante comprenant au moins deux sous-arborescences distinctes se terminant par un ensemble de dispositifs hôtes identiques, dans lequel chaque sous-arborescence comprend au moins un étage intermédiaire et dans lequel un élément d'arborescence d'étage intermédiaire d'une arborescence n'est pas directement connecté à un élément d'arborescence d'étage intermédiaire d'une autre arborescence au même étage, **caractérisé en ce que** le procédé comprend :
la surveillance, dans un dispositif hôte, de l'état d'une liaison montante active conduisant à un élément d'arborescence intermédiaire dans une première arborescence,
la détection, dans le dispositif hôte, d'un état de défaillance de liaison dans la liaison montante active,
la notification de l'état de défaillance de liaison au logiciel hôte, et
le lancement d'un processus de reprise dans le dispositif hôte en changeant la liaison montante active défaillante en une liaison montante redondante conduisant à un élément d'arborescence intermédiaire d'étage supérieur dans une deuxième arborescence.

6. Procédé selon la revendication 5, dans lequel le processus de reprise comprend :
le contrôle du statut d'une liaison montante redondante, et si ladite liaison montante est dans l'état de défaillance de liaison ; et
le transfert dudit hôte à une opération de mode par défaut prédéterminée.

7. Procédé selon la revendication 5 ou 6, **caractérisé en ce que** ladite liaison montante redondante est une liaison montante de doublage pour ladite liaison montante active.

8. Procédé selon l'une quelconque des revendications 5 à 7, **caractérisé en ce que** la surveillance de l'état d'une liaison montante critique est accomplie en surveillant la qualité du flux de données sur la liaison.

9. Appareil de reprise rapide d'une connexion d'hôte dans un réseau local structuré en arborescence redondante comprenant au moins deux sous-arborescences distinctes se terminant par un ensemble de dispositifs hôtes identiques, dans lequel chaque sous-arborescence comprend au moins un étage intermédiaire et dans lequel un élément d'arborescence d'étage intermédiaire d'une arborescence n'est pas directement connecté à un élément d'arborescence d'étage intermédiaire d'une autre arborescence au même étage, **caractérisé en ce que** l'appareil est configuré pour :
surveiller l'état d'une liaison montante critique, la liaison montante critique étant une liaison unique vers un élément d'arborescence d'étage supérieur dans la structure d'arborescence,
détecter un état de défaillance de liaison dans la liaison montante critique, et
régler une liaison descendante dépendante dans un état de défaillance de liaison, la liaison descendante dépendante conduisant à un élément d'arborescence d'étage inférieur dans la structure d'arborescence et étant une liaison unique vers l'élément d'arborescence d'étage inférieur dans la structure d'arborescence.

10. Appareil selon la revendication 9, dans lequel l'appareil comprend en outre :
un dispositif de couche physique (PHY) pour surveiller l'état physique de ladite liaison montante, et
un contrôleur d'accès au support (MAC) pour changer l'état de la liaison descendante.

11. Appareil selon la revendication 9 ou 10, dans lequel la liaison montante est une liaison montante critique, si la défaillance de ladite liaison affecte le flux de données d'une liaison descendante dudit élément de réseau.

12. Système selon l'une quelconque des revendications 9 à 11, **caractérisé en ce que** ladite surveillance est effectuée avec un contrôleur Ethernet.

13. Dispositif hôte dans un réseau local structuré en arborescence redondante comprenant au moins deux sous-arborescences distinctes se terminant par un ensemble de dispositifs hôtes identiques, dans lequel chaque sous-arborescence comprend au moins un étage intermédiaire et dans lequel un élément d'arborescence d'étage intermédiaire d'une arborescence n'est pas directement connecté à un élément d'arborescence d'étage intermédiaire d'une autre arborescence au même étage, **caractérisé en ce que** le dispositif hôte est configuré pour :
surveiller l'état d'une liaison montante active conduisant à un élément d'arborescence intermédiaire dans une première arborescence,
détecter un état de défaillance de liaison dans la liaison montante active, notifier l'état de défaillance de liaison au logiciel hôte, et
lancer un processus de reprise en changeant la liaison montante active défaillante en une liaison montante redondante conduisant à un élément d'arborescence intermédiaire d'étage supérieur dans une deuxième arborescence.

14. Dispositif hôte selon la revendication 13, dans lequel le dispositif hôte est en outre configuré pour :
contrôler le statut d'une liaison montante redondante, et si ladite liaison montante est dans l'état de défaillance de liaison ; et
transférer ledit hôte à une opération de mode par défaut prédéterminée.
